# EUROPEAN PATENT APPLICATION

(11) **EP 2 607 521 A1**
(43) Date of publication of application: **26.06.2013**
(21) Application number: 11818189.0
(22) Date of filing: 16.08.2011
(51) Int. Cl.: C23C 22/07, C23C 22/23, F28F 19/06

(54) **SURFACE-TREATED METAL MATERIAL HAVING EXCELLENT SCALE ADHESION-SUPPRESSING PROPERTIES, METHOD FOR PRODUCING SAME, HEAT EXCHANGER, AND SEAWATER EVAPORATOR**

(30) Priority: 21.06.2011 JP 2011137067; 07.02.2011 JP 2011024106; 19.08.2010 JP 2010184450
(71) Applicant: Kabushiki Kaisha Kobe Seiko Sho, Kobe-shi, Hyogo 651-8585 (JP)
(72) Inventor: YANAGISAWA Kasumi, HYOGO 651-2271 (JP)
(74) Representative: Müller-Boré & Partner Patentanwälte
(86) International application number: PCT/JP2011/068542
(87) International publication number: WO 2012/023548

(57) **Abstract**

This surface-treated metal material has a base material that is formed of titanium, a titanium alloy or stainless steel, and the surface of the base material is modified. From the outermost surface to a depth of 10 nm of the surface-treated metal material, the P concentration is not less than 1.0 % by atom and the total concentration of one or more metal elements selected from the group consisting of Sn, Co, Ni, Fe, Zn and Mg is not less than 1.0% by atom. The surface-treated metal material excellently suppresses adhesion of scales that are mainly composed of calcium carbonate.

## Description

### Technical Field

The present invention relates: to a surface-treated metal material used for a heat exchanger, a seawater evaporator, etc., a method for producing the material, and a heat exchanger, a seawater evaporator, etc. formed by disposing the surface-treated metal material; and in particular to a surface-treated metal material or the like excellently suppressing adhesion of scale that is mainly composed of calcium carbonate.

### Background Art

A titanium material, a titanium alloy material, or stainless steel having corrosion resistance and good heat conductivity is heavily used for a heat exchanger (for example, a plate type heat exchanger) and a seawater evaporator (seawater desalination equipment) (those materials are collectively referred to as "a metal material" in some cases). Small amounts of calcium ions (Ca²⁺) and hydrogen carbonate ions (HCO₃-) are contained in water, such as ground water and service water, being in contact with a metal material. It is known that, for that reason, when water is heated with a heat exchanger or a seawater evaporator, calcium carbonate (CaCO₃) is formed through the reaction formula (1) below and scale mainly composed of the calcium carbonate adheres to the surface of a metal material:

Ca²⁺ + 2HCO₃- → Ca(HCO₃)₂ → CO₂ + H₂O + CaCO₃ (1).

The above reaction tends to advance as a temperature rises. In particular, the temperature of water being in contact with a metal material used in a heat exchanger or a seawater evaporator rises to about 60°C to 90°C and scale mainly composed of the calcium carbonate (hereunder referred to merely as "scale" in some cases) is likely to be formed in such an environment. When a heat exchanger or a seawater evaporator is used for a long period of time, scale adheres to a metal material abundantly and the heat conductivity of such equipment deteriorates. For that reason, presently labors for removing scale adhering to the surface of a metal material are required periodically at a frequency of once a month to once a year and a problem here is that maintenance cost increases.

A scale remover used for effectively carrying out maintenance for the removal of scale is proposed (for example, Patent Literature 1). In the technology, a scale remover containing oxycarboxylic acid, sulfamic acid, and ammonium sulfate as active components is proposed and it is shown that scale adhering to the surface of a metal material can be removed with a high degree of efficiency.

The above technology however is a technology of neither suppressing the adhesion itself of scale nor reducing maintenance frequency and is not a technology of solving the deterioration of heat conductivity itself caused by the adhesion of scale mainly composed of calcium carbonate to a metal material.

### Prior Art Literature

### Patent Literature

Patent Literature 1: Japanese Patent No. 3647843

### Disclosure of the Invention

### Problem to be solved by the invention

The present invention has been established in view of the above situation and an object of the present invention is to provide a surface-treated metal material excellently suppressing adhesion of scale that is mainly composed of calcium carbonate, a method for effectively producing such a surface-treated metal material, and a heat exchanger, a seawater evaporator, etc. formed by disposing such a surface-treated metal material.

### Means for solving the problem

A surface-treated metal material according to the present invention that has solved the above problems is characterized by a surface-treated metal material formed by modifying the surface of a base material comprising titanium, a titanium alloy, or stainless steel (in particular, comprising titanium or a titanium alloy), wherein, from the outermost surface to a depth of 10 nm, a P concentration is not less than 1.0% by atom and a total concentration of one or more metal elements selected from the group consisting of Sn, Co, Ni, Fe, Zn, and Mg is not less than 1.0% by atom.

The above problems of the present invention can be solved also by adopting a surface-treated metal material formed by modifying the surface of a base material comprising titanium, a titanium alloy, or stainless steel (in particular, comprising titanium or a titanium alloy), wherein, from the outermost surface to a depth of 200 nm, a P concentration is not less than 1.0% by atom and a total concentration of one or more metal elements selected from the group consisting of Sn, Co, Ni, Fe, Zn, and Mg is not less than 1.0% by atom. Here, "from the outermost surface to a depth of 10 or 200 nm, a P concentration is not less than 1.0% by atom and a total concentration of one or more metal elements selected from the group consisting of Sn, Co, Ni, Fe, Zn, and Mg is not less than 1.0% by atom" means "at any position from the outermost surface to a depth of 10 or 200 nm, a P concentration is not less than 1.0% by atom and a total concentration of one or more metal elements selected from the group consisting of Sn, Co, Ni, Fe, Zn, and Mg is not less than 1.0% by atom".

Such a surface-treated metal material can be produced by immersing a base material in a solution containing a chemical compound containing P and one or more metal ions selected from the group consisting of Sn, Co, Ni, Fe, Zn, and Mg.

In such a production method, it is preferable that the solution further contains hydrofluoric acid and nitric acid.

By disposing such a surface-treated metal material at a heat-transfer part where water or seawater is circulated as a medium so that the modified surface may be brought into contact with the water or seawater, it is possible to: suppress adhesion of scale mainly composed of calcium carbonate to the surface-treated metal material; and materialize a metal-made heat exchanger or seawater evaporator that allows maintenance frequency to be reduced.

### Effect of the invention

In a surface-treated metal material according to the present invention, by controlling a P concentration to not less than 1.0% by atom and a total concentration of one or more metal elements selected from the group consisting of Sn, Co, Ni, Fe, Zn, and Mg to not less than 1.0% by atom from the outermost surface to a depth of 10 or 200 nm, adhesion of scale mainly composed of calcium carbonate is suppressed and the surface-treated metal material is very useful as a base material of a metal-made heat exchanger or seawater evaporator that can reduce maintenance frequency.

### Brief Description of the Drawings

Fig. 1 is a drawing-substitute SEM photograph showing a scale adhesion state on a titanium material surface in Test No. 1.
Fig. 2 is a drawing-substitute SEM photograph showing a scale adhesion state on a titanium material surface in Test No. 5.

### Best Mode for Carrying Out the Invention

The present inventors have studied from various angles in order to materialize a surface-treated metal material suppressing the adhesion of scale mainly composed of calcium carbonate. As a result, the present inventors: have found that excellent scale adhesion-suppressing properties can be obtained by forming a layer allowing P (phosphorus) and one or more metal elements selected from the group consisting of Sn, Co, Ni, Fe, Zn, and Mg (hereunder referred to as "a modified layer" for convenience in some cases) to coexist on the surface of a metal base material; and have completed the present invention.

It has been further found that, in the case where a layer allowing P (phosphorus) and one or more metal elements selected from the group consisting of Sn, Co, Ni, Fe, Zn, and Mg to coexist is formed on the surface of a base material comprising titanium or a titanium alloy (hereunder represented by "a titanium material" in some cases) or stainless steel, those elements are taken in and the layer comes to be a relatively thick modified layer (surface modified layer) when a passive film is reproduced by nitric acid while titanium is dissolved by hydrofluoric acid. Even in the case of forming such a surface modified layer, excellent scale adhesion-suppressing properties are obtained.

Although the reason why excellent scale adhesion-suppressing properties are obtained by forming such a modified layer on the surface of a metal material is not completely clarified, a presumable reason is as follows. That is, it is estimated that, in a modified layer containing a specific quantity of a specific metal element together with P, when the modified layer comes into contact with water (water and seawater), P and the metal component in the modified layer dissolve gradually in the water, adsorb to the crystal growth plane of calcium carbonate, and resultantly hinder the crystal growth of calcium carbonate (suppress the advance of the reaction of the formula (1)), and hence the adhesion of scale is suppressed.

Although a modified layer formed on the surface of a metal base material is in the state of not being clearly distinguishable from an interface (boundary) with the mother metal material, the thickness of the modified layer is judged to be not less than 10 nm or not less than 200 nm because a P concentration and a metal element concentration are in the above ranges from the outermost surface (surface of the modified layer) to a depth of 10 nm or a depth of 200 nm and the thickness of not less than 10 nm or not less than 200 nm causes the effect of the present invention to be exhibited. That is, since a concentration at a deepest location (10 nm or 200 nm from the outermost surface) is the smallest, it is possible to know a concentration in a modified layer by investigating a concentration at such a deepest location.

In order to suppress the adhesion of scale, it is necessary to control, from the outermost surface (surface of a modified layer) to a depth of 10 nm or 200 nm, a P concentration to not less than 1.0% by atom and a total concentration of one or more metal elements selected from the group consisting of Sn, Co, Ni, Fe, Zn, and Mg to not less than 1.0% by atom. A P concentration is higher at a location shallower than such a location. If either of the concentrations is less than 1.0% by atom, the quantity of a dissolved element is insufficient and the growth of calcium carbonate cannot sufficiently be suppressed. Such a concentration (each of a P concentration and a metal element concentration) is preferably not less than 2% by atom (yet preferably not less than 3% by atom) and, from the viewpoint of real manufacturability, preferably not more than 50% by atom (for example, not more than 30% by atom, particularly not more than 10% by atom). The reason why the measurement location of each component concentration is standardized as "a location from a modified layer surface to a depth of 10 nm" or "a location from a modified layer surface to a depth of 200 nm" is based on the viewpoint that the thickness of each modified layer formed is taken into consideration and the depth at which each element dissolves in a real environment during service is "10 nm" or "200 nm" in each thickness.

As the elements constituting such a modified layer, P (phosphorus) and the metal elements (Sn, Co, Ni, Fe, Zn, and Mg) are contained at prescribed proportions and the other (remainder) comprises basically oxygen (O) and titanium (Ti) in the case where a metal base material is titanium or a titanium alloy. In the case where a metal base material is stainless steel, as the elements constituting such a modified layer, also P (phosphorus) and the metal elements (Sn, Co, Ni, Fe, Zn, and Mg) are contained at prescribed proportions but the other (remainder) comprises basically oxygen (O), iron (Fe), and chromium (Cr). It is estimated that such a modified layer exists in the state where P (phosphorus) and the metal elements combine with oxygen in an oxide film on the surface of a metal material.

By applying a surface-treated metal material having such a modified layer to a heat-transfer part of a heat exchanger or a seawater evaporator where water or seawater is circulated under a high temperature condition of being likely to generate scale mainly composed of calcium carbonate, it is possible to reduce the deterioration of heat-transfer efficiency and reduce maintenance frequency.

A surface-treated metal material according to the present invention can be produced by immersing a base material comprising titanium, a titanium alloy, or stainless steel in an aqueous solution (the metal elements are in the state of ions) formed by dissolving both (a) a chemical compound containing P (phosphorus) (for example, phosphoric acids such as phosphoric acid, phosphorous acid, and polyphosphoric acid and the salts thereof) and (b) salts of the metal elements (one or more metal elements selected from the group consisting of Sn, Co, Ni, Fe, Zn, and Mg) (for example, a sulfate, a chloride, and an acetate). Further, a relatively thick surface modified layer can be formed by immersing a base material comprising titanium, a titanium alloy, or stainless steel in a solution containing a chemical compound containing P (phosphorus), one or more metal ions selected from the group consisting of Sn, Co, Ni, Fe, Zn, and Mg, and hydrofluoric acid and nitric acid. Here, the thickness of a modified layer formed in this way can be adjusted by changing immersion time (total time when immersed more than once). Further, each of the contents of hydrofluoric acid and nitric acid in the solution is preferably about 0.05% to 1.0%.

As titanium materials used as a base material in the present invention, industrial pure titanium Categories 1 to 4 (JIS H4600) are named for example. As a titanium alloy material, a Ti-0.15 mass% Pd alloy is named for example. Further, as stainless steel used as a base material in the present invention, SUS304 (JIS G4304) is named as a representative example but the stainless steel is not limited to SUS 304 and stainless steel of SUS403 and SUS 430 can also be used for example. Furthermore, such a base material may be washed by acetone, an acid solution, or the like before it is subjected to surface treatment.

The shape of a surface-treated metal material according to the present invention can be either a tabular shape or a tubular shape. For example, in the case of a plate type heat exchanger, a surface-treated metal material is used as a heat exchanger member in the state (of a plate) having many wavy protrusions formed on the surface of a tabular metal material. In a seawater evaporator, a metal material formed into a tubular shape is used as a heat-transfer tube. On this occasion, a surface modified layer is allocated on the side where wavy protrusions are formed in the case of a plate type heat exchanger and on the outside surface of a heat-transfer tube in the case of a seawater evaporator, and a cooling medium (water or seawater) is brought into contact with the surface modified layer.

Although the configuration and function effect of the present invention are hereunder explained more concretely on the basis of examples, the present invention is of course not limited to the examples below and can be applied by appropriately changing within a range conforming to above- and after-mentioned tenor and the changes are all included in the technological scope of the present invention.

### Examples

### [Example 1]

### <Production of test material>

A plate (0.5 mm in thickness) comprising industrial pure titanium Category 2 (JIS H4600) is used as titanium for a base material, cut out into a size of 10 mm x 50 mm, washed by acetone, and then air-dried at room temperature. The titanium plate is immersed in a mixed acid aqueous solution (2%HF-10%HNO₃) comprising hydrofluoric acid and nitric acid for 15 sec. at room temperature, successively washed by ion-exchanged water, immersed in a mixed aqueous solution (surface treatment liquid) of polyphosphate (sodium polyphosphate: Naₙ₊₂PₙO₃ₙ₊₁) and a metallic salt (chloride), those being shown in Table 1 below, for 3 min. or 3 to 12 hours, successively washed by ion-exchanged water again, and air-dried at room temperature.

### <Measurement of surface element concentration>

The concentration of each of elements in a modified layer is measured by a glow discharge optical emission spectrometry (GD-OES). A test material is cut into about 10 mm square, embedded into indium (In), and used for measurement. Analysis is carried out under the conditions of anode diameter (analysis area): 4 mmφ, discharge power: 35 W, and argon (Ar) gas pressure: 600 Pa in a pulse sputter analysis mode with a GD-PROFILER 2 type GD-OES apparatus made by HORIBA, Ltd. The depth of the outermost surface (surface of a modified layer) of a test material is defined as zero, an element distribution in the direction of the material depth is investigated, and an element concentration at a location 10 nm deep from the outermost surface is defined as an evaluation indicator of the modified layer. Here, the reason why an element concentration is measured at "a location 10 nm deep from the outermost surface" is that an element concentration decreases as the depth from the outermost surface increases, the concentration at the location comes to be the lowest concentration in the range, and hence it is possible to judge what degree or more "a concentration from the outermost surface to the depth of 10 nm" is by the concentration at the location.

### <Evaluation of scale adherability>

As a scale adhesion liquid, a mixed aqueous solution (Ca concentration: 354 ppm) comprising 1.5 g/L (liter) of sodium bicarbonate (NaHCO₃) and 1.3 g/L of calcium chloride (CaCl₂ ·2H₂O) is prepared at 20°C (sodium bicarbonate and calcium chloride are special grade reagents made by Wako Pure Chemical Industries, Ltd.).

The above aqueous solution of 30 mL is poured into a slender beaker and a test material the mass of which has been measured beforehand is immersed. Then a cycle is defined as finished when a test liquid in the slender beaker rises to 90°C from room temperature (20°C) after the slender beaker is put in a water bath of 90°C. As a next cycle, the test liquid in the slender beaker is replaced with a new test liquid (20°C, 30 mL) and the temperature is raised repeatedly likewise (scale adhesion process). Here, it takes about 6 min. for raising the temperature of a test liquid to 90°C in a cycle.

In the scale adhesion process, 10 cycles are applied to each of the test materials. Scale adherability is evaluated by taking out a test material from the mixed aqueous solution and measuring the mass of the air-dried titanium material after the scale adhesion of 10 cycles. After the scale adhesion process, a titanium plate taken out from the scale forming liquid is dried and weighed and the mass of the titanium plate is measured. Then the quantity of adhering scale per unit area (mg/mm²) is computed through the difference from the mass of the titanium material before subjected to the scale adhesion process (titanium material before scale adhesion).

The results are shown in Table 1 (Test Nos. 1 to 11) below together with the types of surface treatment liquids.

**TABLE 1**

| Test No. | Surface treatment liquid | | | | Immersion time | Concentration at location 10 nm deep | | Adhering scale quantity (× 10⁻⁴mg/mm²) |
|---|---|---|---|---|---|---|---|---|
| | Polyphosphate | Polyphosphate concentration (g/L) | Metallic salt | Metallic salt concentration (g/L) | | P (% by atom) | Metal element (% by atom) | |
| 1 | - | 0 | - | 0 | 12 Hr. | <0. 01 | <0. 01 | 16. 0 |
| 2 | Naₙ₊₂PₙO₃ₙ₊₁ | 20 | - | 0 | 12 Hr. | 4. 5 | <0. 01 | 13. 8 |
| 3 | Naₙ₊₂PₙO₃ₙ₊₁ | 20 | SnCl₂ | 19 | 3 Min. | 0. 7 | 0. 5 | 13. 2 |
| 4 | - | 0 | SnCl₂ | 19 | 12 Hr. | <0. 01 | 3. 5 | 14. 9 |
| 5 | Naₙ₊₂PₙO₃ₙ₊₁ | 20 | SnCl₂ | 19 | 12 Hr. | 4. 6 | 3. 5 | 2. 1 |
| 6 | Naₙ₊₂PₙO₃ₙ₊₁ | 20 | SnCl₂ | 19 | 3 Hr. | 1. 3 | 1. 1 | 7. 9 |
| 7 | Naₙ₊₂PₙO₃ₙ₊₁ | 20 | FeCl₃ | 16 | 12 Hr. | 5. 0 | 4. 7 | 5. 0 |
| 8 | Naₙ₊₂PₙO₃ₙ₊₁ | 20 | CoCl₂ | 13 | 12 Hr. | 2. 8 | 3. 5 | 4. 6 |
| 9 | Naₙ₊₂PₙO₃ₙ₊₁ | 20 | NiCl₂ | 13 | 12 Hr. | 3. 4 | 2. 2 | 5. 2 |
| 10 | Naₙ₊₂PₙO₃ₙ₊₁ | 20 | ZnCl₂ | 15 | 12 Hr. | 4. 6 | 4. 1 | 3. 0 |
| 11 | Naₙ₊₂PₙO₃ₙ₊₁ | 20 | MgCl₂ | 16 | 12 Hr. | 4. 3 | 3. 9 | 2. 8 |

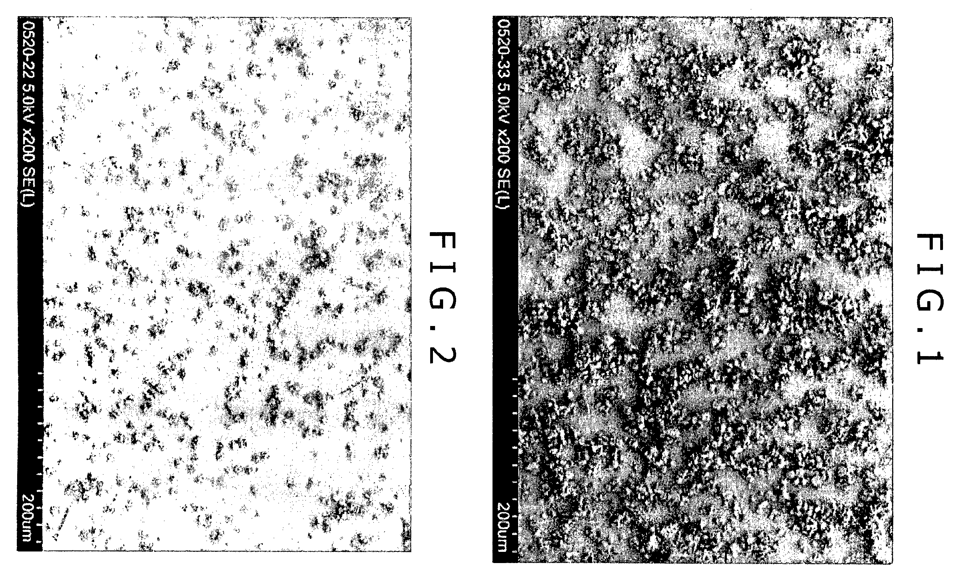

The results can be discussed as follows. Firstly Test No. 1 is the case of immersing a test material in ion-exchanged water containing neither polyphosphate nor a metallic salt and, in the case, each of the concentrations of P and a metal element existing at the location 10 nm deep from the outermost surface (location from the outermost surface to a depth of 10 nm) is only less than 0.01% by atom, the adhering scale quantity is 16.0x10⁻⁴ mg/mm², and the surface is in the state of being covered with scale of calcium carbonate. The state of adhering scale on the surface of the titanium material on this occasion is shown in Fig. 1 (drawing-substitute SEM photograph).

Test No. 2 is the case of immersing a test material in an aqueous solution containing polyphosphate but not containing a metallic salt and, in the case, the P concentration is 4.5% by atom but the concentration of the existing metal element is only less than 0.01% by atom at the location 10 nm deep, and the adhering scale quantity reduces scarcely in comparison with Test No. 1.

Test No. 3 is the case of immersing a test material in an aqueous solution containing both polyphosphate and a metallic salt (tin chloride) and, in the case, the immersion time is as short as 3 min., each of the concentrations of P and the metal element (Sn) existing at the location 10 nm deep is only less than 1.0% by atom, and the adhering scale quantity reduces scarcely in comparison with Test No. 1.

Test No. 4 is the case of immersing a test material in an aqueous solution containing a metallic salt (tin chloride) but not containing polyphosphate and, in the case, the Sn concentration is 3.5% by atom but the p concentration is only less than 0.01% by atom at the location 10 nm deep, and the adhering scale quantity reduces scarcely in comparison with Test No. 1.

Test No. 5 is the case of sufficiently immersing a test material in an aqueous solution containing both polyphosphate and a metallic salt (tin chloride) and, in the case, a modified layer having the P concentration of 4.6% by atom and the metal element (Sn) of 3.5% by atom at the location 10 nm deep is formed and hence the adhering scale quantity reduces to about 13% of Test No. 1. The state of adhering scale on the surface of the titanium material on this occasion is shown in Fig. 2 (drawing-substitute SEM photograph).

Test No. 6 is the case of immersing a test material in an aqueous solution containing both polyphosphate and a metallic salt (tin chloride) for 3 hours and, in the case, a modified layer having the P concentration of 1.3% by atom and the metal element (Sn) concentration of 1.1% by atom at the location 10 nm deep is formed and hence the adhering scale quantity reduces to about a half of Test No. 1.

Test Nos. 7 to 11 are the cases of sufficiently immersing test materials in aqueous solutions containing both polyphosphate and a metallic salt and, in the cases therefore, modified layers having the P concentrations of 2.8% to 5.0% by atom and the metal element concentrations of 2.2% to 4.7% by atom are formed at the locations 10 nm deep and hence the adhering scale quantities reduce to not more than one-third of Test No. 1.

### [Example 2]

### <Production of test material>

A plate (0.5 mm in thickness) comprising SUS304 (JIS G4304) is used as stainless steel for a base material, cut out into a size of 10 mm x 50 mm, washed by acetone, and then air-dried at room temperature. The stainless steel plate is washed by ion-exchanged water and immersed in a mixed aqueous solution (surface treatment liquid) of polyphosphate (sodium polyphosphate: Naₙ₊₂PₙO₃ₙ₊₁) and a metallic salt (chloride), those being shown in Table 2 below, for 3 min. or 3 to 12 hours, successively washed by ion-exchanged water again, and air-dried at room temperature.

With regard to the surface-treated stainless steel materials, the measurement of a surface element concentration and the evaluation of scale adherability are carried out in the same manner as Example 1.

The results are shown in Table 2 (Test Nos. 12 to 22) below together with the types of surface treatment liquids.

**TABLE 2**

| Test No. | Surface treatment liquid | | | | Immersion time | Concentration at location 10 nm deep | | Adhering scale quantity (× 10⁻⁴mg/mm²) |
|---|---|---|---|---|---|---|---|---|
| | Polyphosphate | Polyphosphate concentration (g/L) | Metallic salt | Metallic salt concentration (g/L) | | P (% by atom) | Mental element (% by atom) | |
| 12 | - | 0 | - | 0 | 12 Hr. | <0. 01 | <0. 01 | 20. 1 |
| 13 | Naₙ₊₂PₙO₃ₙ₊₁ | 20 | - | 0 | 12 Hr. | 3. 9 | <0. 01 | 18. 0 |
| 14 | Naₙ₊₂PₙO₃ₙ₊₁ | 20 | SnCl₂ | 19 | 3 Min. | 0. 6 | 0. 5 | 18. 3 |
| 15 | - | 0 | SnCl₂ | 19 | 12 Hr. | <0. 01 | 2. 8 | 19. 2 |
| 16 | Naₙ₊₂PₙO₃ₙ₊₁ | 20 | SnCl₂ | 19 | 12 Hr. | 5. 5 | 4. 0 | 10. 1 |
| 17 | Naₙ₊₂PₙO₃ₙ₊₁ | 20 | SnCl₂ | 19 | 3 Hr. | 1. 6 | 1. 2 | 14. 2 |
| 18 | Naₙ₊₂PₙO₃ₙ₊₁ | 20 | FeCl₃ | 16 | 12 Hr. | 3. 6 | 4. 0 | 9. 3 |
| 19 | Naₙ₊₂PₙO₃ₙ₊₁ | 20 | CoCl₂ | 13 | 12 Hr. | 3. 0 | 2. 8 | 10. 5 |
| 20 | Naₙ₊₂PₙO₃ₙ₊₁ | 20 | NiCl₂ | 13 | 12 Hr. | 2. 3 | 2. 2 | 11. 0 |
| 21 | Naₙ₊₂PₙO₃ₙ₊₁ | 20 | ZnCl₂ | 15 | 12 Hr. | 4. 4 | 4. 1 | 11. 9 |
| 22 | Naₙ₊₂PₙO₃ₙ₊₁ | 20 | MgCl₂ | 16 | 12 Hr. | 2. 6 | 2. 0 | 9. 9 |

The results can be discussed as follows. Firstly Test No. 12 is the case of immersing a test material in ion-exchanged water containing neither polyphosphate nor a metallic salt and, in the case, each of the concentrations of P and a metal element existing at the location 10 nm deep from the outermost surface (location from the outermost surface to a depth of 10 nm) is only less than 0.01% by atom, the adhering scale quantity is 20.1x10⁻⁴ mg/mm², and the surface is in the state of being covered with scale of calcium carbonate.

Test No. 13 is the case of immersing a test material in an aqueous solution containing polyphosphate but not containing a metallic salt and, in the case, the P concentration is 3.9% by atom but the concentration of the existing metal element is only less than 0.01% by atom at the location 10 nm deep, and the adhering scale quantity reduces scarcely in comparison with Test No. 12.

Test No. 14 is the case of immersing a test material in an aqueous solution containing both polyphosphate and a metallic salt (tin chloride) and, in the case, the immersion time is as short as 3 min., each of the concentrations of P and the metal element (Sn) existing at the location 10 nm deep is only less than 1.0% by atom, and the adhering scale quantity reduces scarcely in comparison with Test No. 12.

Test No. 15 is the case of immersing a test material in an aqueous solution containing a metallic salt (tin chloride) but not containing polyphosphate and, in the case, the Sn concentration is 2.8% by atom but the p concentration is only less than 0.01% by atom at the location 10 nm deep, and the adhering scale quantity reduces scarcely in comparison with Test No. 12.

Test No. 16 is the case of sufficiently immersing a test material in an aqueous solution containing both polyphosphate and a metallic salt (tin chloride) and, in the case, a modified layer having the P concentration of 5.5% by atom and the metal element (Sn) concentration of 4.0% by atom at the location 10 nm deep is formed and hence the adhering scale quantity reduces to about a half of Test No. 12.

Test No. 17 is the case of immersing a test material in an aqueous solution containing both polyphosphate and a metallic salt (tin chloride) for 3 hours and, in the case, a modified layer having the P concentration of 1.6% by atom and the metal element (Sn) concentration of 1.2% by atom at the location 10 nm deep is formed and hence the adhering scale quantity reduces to about 70% of Test No. 12.

Test Nos. 18 to 22 are the cases of sufficiently immersing test materials in aqueous solutions containing both polyphosphate and a metallic salt and, in the cases therefore, modified layers having the P concentrations of 2.3% to 4.4% by atom and the metal element concentrations of 2.0% to 4.1% by atom are formed at the locations 10 nm deep and hence the adhering scale quantities reduce to not more than 60% of Test No. 12.

### [Example 3]

### <Production of test material>

A plate (0.5 mm in thickness) comprising industrial pure titanium Category 2 (JIS H4600) is used as titanium for a base material, cut out into a size of 10 mm x 50 mm, washed by acetone, and then air-dried at room temperature. The titanium plate is immersed in a mixed acid aqueous solution (2%HF-10%HNO₃) comprising hydrofluoric acid and nitric acid for 15 sec. at room temperature, successively washed by ion-exchanged water, immersed in a surface treatment liquid of polyphosphate (sodium polyphosphate: Naₙ₊₂PₙO₃ₙ₊₁) and a metallic salt (chloride) containing water or hydrofluoric acid and nitric acid (0.1%HF-0.5%HNO₃) as a solvent, those being shown in Table 3 below, for 12 hours, successively washed by ion-exchanged water again, and air-dried at room temperature.

With regard to the surface-treated titanium materials, the measurement of a surface element concentration and the evaluation of scale adherability are carried out by the following methods.

### <Measurement of surface element concentration>

A surface element concentration is measured in the same manner as Example 1 except that the element concentration is measured at "a location 200 nm deep from the outermost surface". Here, the reason why an element concentration is measured at "a location 200 nm deep from the outermost surface" is that an element concentration decreases as the depth from the outermost surface increases in the same manner as stated above, the concentration at the location comes to be the lowest concentration in the range, and hence it is possible to judge what degree or more "a concentration from the outermost surface to the depth of 200 nm" is by the concentration at the location.

### <Evaluation of scale adherability>

Scale adherability is measured in the same manner as Example 1 except that 20 cycles are applied to each of the test materials in the scale adhesion process.

The results are shown in Table 3 (Test Nos. 23 to 30) below together with the types of surface treatment liquids.

**TABLE 3**

| Test No. | Surface treatment liquid | | | | | Concentration at location 200 nm deep | | Adhering scale quantity (× 10⁻⁴mg/mm²) |
|---|---|---|---|---|---|---|---|---|
| | Polyphosphate | Polyphosphate concentration (g/L) | Metallic salt | Metallic salt concentration (g/L) | Solvent | P (% by atom) | Metal element (% by atom) | |
| 23 | - | 0 | - | 0 | Pure water | <0. 01 | <0. 01 | 28. 0 |
| 24 | Naₙ₊₂PₙO₃ₙ₊₁ | 20 | SnCl₂ | 19 | Pure water | <0. 01 | <0. 01 | 15. 3 |
| 25 | Naₙ₊₂PₙO₃ₙ₊₁ | 20 | SnCl₂ | 19 | 0.1%HF-0.5%HNO₃ | 8. 0 | 4. 3 | 1. 5 |
| 26 | Naₙ₊₂PₙO₃ₙ₊₁ | 20 | FeCl₃ | 16 | 0.1%HF-0.5%HNO₃ | 6. 2 | 4. 1 | 3. 0 |
| 27 | Naₙ₊₂PₙO₃ₙ₊₁ | 20 | CoCl₂ | 13 | 0.1%HF-0.5%HNO₃ | 3. 8 | 3. 9 | 2. 2 |
| 28 | Naₙ₊₂PₙO₃ₙ₊₁ | 20 | NiCl₂ | 13 | 0.1%HF-0.5%HNO₃ | 2. 4 | 3. 2 | 1. 8 |
| 29 | Naₙ₊₂PₙO₃ₙ₊₁ | 20 | ZnCl₃ | 15 | 0.1%HF-0.5%HNO₃ | 1. 6 | 1. 9 | 3. 8 |
| 30 | Naₙ₊₂PₙO₃ₙ₊₁ | 20 | MgCl₂ | 16 | 0.1%HF-0.5%HNO₃ | 4. 2 | 2. 5 | 2. 7 |

The results can be discussed as follows. Firstly Test No. 23 is the case of immersing a test material in ion-exchanged water containing neither polyphosphate nor a metallic salt and, in the case, each of the concentrations of P and a metal element existing at the location 200 nm deep from the outermost surface (location from the outermost surface to a depth of 200 nm) is only less than 0.01% by atom, the adhering scale quantity is 28.0x10⁻⁴ mg/mm², and the surface is in the state of being covered with scale of calcium carbonate.

Test No. 24 is the case of immersing a test material in an aqueous solution containing both polyphosphate and a metallic salt (tin chloride) and, in the case, although each of the concentrations of P and the metal element (Sn) existing at the location 200 nm deep is only less than 0.01% by atom and the adhering scale quantity reduces in comparison with Test No. 23, the surface is in the state of being covered with scale of calcium carbonate. Here, even in Test No. 24, a thin surface modified layer is formed (refer to Table 3) and hence the adhering scale quantity reduces in comparison with Test No. 23.

Test Nos. 25 to 30 are the cases of sufficiently immersing test materials in aqueous solutions containing both polyphosphate and a metallic salt and, in the cases therefore, modified layers having the P concentrations of 1.6% to 8.0% by atom and the metal element concentrations of 1.9% to 4.3% by atom are formed at the locations 200 nm deep and hence the adhering scale quantities reduce to not more than 13% of Test No. 23.

Although the present invention has been explained in detail or in reference to specific embodiments, it is obvious for those skilled in the art that the present invention can be changed and modified variously without departing from the spirit and scope of the present invention. The present application is based on Japanese Patent Application No. 2010-184450 filed on August 19, 2010, Japanese Patent Application No. 2011-024106 filed on February 7, 2011, and Japanese Patent Application No. 2011-137067 filed on June 21, 2011 and the contents thereof are incorporated herein by reference.

### Industrial Applicability

A surface-treated metal material according to the present invention is suitable for a heat exchanger, a seawater evaporator, etc. because the adhesion of scale mainly composed of calcium carbonate can be suppressed.

## Claims

1. A surface-treated metal material having excellent scale adhesion-suppressing properties, formed by modifying the surface of a base material comprising titanium, a titanium alloy, or stainless steel, wherein, from the outermost surface to a depth of 10 nm, a P concentration is not less than 1.0% by atom and a total concentration of one or more metal elements selected from the group consisting of Sn, Co, Ni, Fe, Zn, and Mg is not less than 1.0% by atom.

2. The surface-treated metal material of claim 1, wherein the base material comprises titanium or a titanium alloy.

3. The surface-treated metal material of claim 1 or 2, wherein, from the outermost surface to a depth of 200 nm, a P concentration is not less than 1.0% by atom and a total concentration of one or more metal elements selected from the group consisting of Sn, Co, Ni, Fe, Zn, and Mg is not less than 1.0% by atom.

4. A method for producing a surface-treated metal material having excellent scale adhesion-suppressing properties, wherein a base material is immersed in a solution containing a chemical compound containing P and one or more metal ions selected from the group consisting of Sn, Co, Ni, Fe, Zn, and Mg when the surface-treated metal material of any one of claims 1 to 3 is produced.

5. The method for producing a surface-treated metal material of claim 4, wherein the solution further contains hydrofluoric acid and nitric acid.

6. A metal-made heat exchanger formed by disposing the surface-treated metal material of any one of claims 1 to 3 at a heat-transfer part where water is circulated as a medium so that the modified surface may be brought into contact with the water.

7. A seawater evaporator formed by disposing the surface-treated metal material of any one of Claims 1 to 3 at a heat-transfer part where seawater is circulated as a medium so that the modified surface may be brought into contact with the seawater.
